# EUROPÄISCHE PATENTSCHRIFT

(11) **EP 3 702 749 B1**
(45) Veröffentlichungstag und Bekanntmachung des Hinweises auf die Patenterteilung: **10.11.2021**
(21) Anmeldenummer: 20000070.1
(22) Anmeldetag: 18.02.2020
(51) Int. Cl.: G01M 1/16, G01M 1/22, G01M 1/36

(54) **VORRICHTUNG UND VERFAHREN ZUR REPRODUZIERBAREN UNWUCHTMESSUNG AN ROTIERENDEN BAUTEILEN MIT VERÄNDERLICHEN UNWUCHTEN**
DEVICE AND METHOD FOR REPRODUCIBLE IMBALANCE MEASUREMENT ON ROTATING COMPONENTS WITH VARIABLE IMBALANCES
DISPOSITIF ET PROCÉDÉ DE MESURE DU DÉSÉQUILIBRE REPRODUCTIBLE SUR DES COMPOSANTS ROTATIFS À DÉSÉQUILIBRES VARIABLES

(30) Priorität: 27.02.2019 EP 19000101
(43) Veröffentlichungstag der Anmeldung: 02.09.2020
(73) Patentinhaber: Hofmann Mess- und Auswuchttechnik GmbH & Co. KG, 64319 Pfungstadt (DE)
(72) Erfinder: Fischer, Georg, 64823 Groß-Umstadt (DE); Puff, Matthias, 64625 Bensheim (DE)
(74) Vertreter: Benz, Jürgen

(56) Entgegenhaltungen:
- ES-T3- 2 197 323
- GB-A- 982 868
- US-A- 6 005 749
- US-A1- 2004 022 170
- US-A1- 2010 009 833

## Beschreibung

### GEBIET DER ERFINDUNG

Die Erfindung betrifft einen Messaufbau und ein Messverfahren zur Erhöhung der Reproduzierbarkeit und Genauigkeit der Unwuchtmessung von rotierenden Bauteilen mit vagabundierendem, veränderlichem Unwuchtverhalten.

Die Erfindung betrifft insbesondere eine Messvorrichtung sowie ein Verfahren, mit dem die Messvorrichtung betrieben wird, bei welcher das Rotationsbauteil eine veränderliche Unwucht aufweist, bedingt durch voneinander unabhängig bewegbaren, schwingungsfähigen Einzelmassen, welche beispielsweise in Fliehkraftpendeln oder ähnlich aufgebauten Torsionsschwingungstilgern eingesetzt werden.

### HINTERGRUND DER ERFINDUNG

Unwuchten liegen bei einem Rotationskörper vor, wenn Masse asymmetrisch verteilt ist. Ursache von Unwucht kann beispielsweise Verschleiß, temperaturbedingte Ausdehnung, fehlerhafte Montage oder produktionsbedingt sein. Durch Anbringung von Korrekturgewichten kann diese Massenasymmetrie ausgeglichen werden.

Fliehkraftpendel sind im Prinzip Schwingungstilger zur Dämpfung von Dreh- bzw. Torsionsschwingungen. Aufgrund der Drehzahlproportionalität werden sie auch als adaptiver Tilger bezeichnet. Fliehkraftpendel, wie sie weitverbreitet zum Beispiel als Bestandteil von Zweimassenschwungrädern (ZMS) in Antriebssträngen, insbesondere im Automobilbau, Verwendung finden, um die starken periodischen Drehschwingungen aus den Hubbewegungen eines Verbrennungsmotors insbesondere bei niedrigen Drehzahlen auszugleichen, entfalten ihre Wirkung dadurch, dass die Schwingung der Pendelmasse eine Kraft entgegen der Drehrichtung des Motors erzeugt.

Zweimassenschwungräder (ZMS) sind Bestandteile des Triebstrangs moderner Fahrzeuge (Pkw, Bus, Nutzfahrzeuge) und dienen zur Reduzierung von Drehschwingungen. Sie umfassen in der Regel eine primäre Schwungmasse (motorseitig) und eine sekundäre Schwungmasse (getriebeseitig), die durch Feder-Dämpfereinheiten miteinander verbunden sind. Der Erfolg des ZMS beruht darauf, dass im Vergleich zu einer torsionsgedämpften Kupplungsscheibe ein weitgehend überkritischer Betrieb möglich ist.

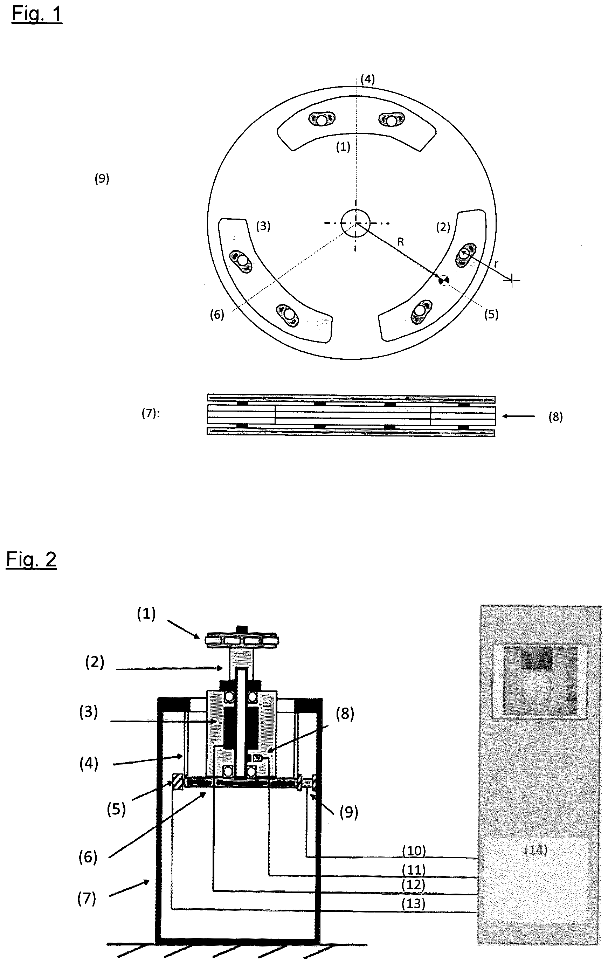

Fliehkraftpendel, wie sie hier für das erfindungsgemäße Verfahren eingesetzt werden, weisen in der Regel zwei oder mehr Einzelmassen auf (FIG. 1, siehe unten), die symmetrisch um den Umfang des Rotationsbauteils herum angeordnet sind, und sich voneinander unabhängig bewegen können, entsprechend der auf sie einwirkenden Schwingungskräfte. Die besagten Einzelmassen besitzen jeweils einen Freiheitsgrad der Bewegung und eine zughörige drehzahlspezifische Tilgereigenfrequenz. Die Abstimmung der Tilgerfrequenz hängt dabei maßgeblich von den beiden Radien r und R sowie der Bauteildrehzahl ab. Die theoretischen Grundlagen sind z.B. bei Dresig,Holzweißig (*Maschinendynamik, Springer, 2011, ISBN 978-3-642-16009-7)* beschrieben.

Die Lage der Einzelmassen ist also anfangs zufällig oder auch chaotisch, was wegen der lagebedingten anfänglich unterschiedlichen Eigenfrequenzen der Einzelmassen zu veränderlichen Unwuchten führt und dazu beiträgt, dass der Unwuchtzustand des Rotationsbauteils, bzw. des Fliehkraftpendels, im Betriebszustand ein anderer sein kann als zu Beginn.

Je nach Bewegungszustand ergeben sich somit unterschiedliche Unwuchtvektoren der Einzelmassen. Dadurch wandert der resultierende Vektor entsprechend, und sowohl Unwuchtbetrag als auch Unwuchtwinkel unterliegen einer Schwankung je nach Lage der Einzelmassen zum Messzeitpunkt. Dabei spielt eine Vielzahl von Einflüssen auf die Ausrichtung der Einzelmassen vor der Messung eine Rolle. Diese können unter anderem sein:
- Drehzahl und somit Fliehkraft
- Ausgangslage der Einzelmassen
- Formgebung der Einzelmassen
- Lagerung der Einzelmassen
- Zwang unter den Einzelmassen
- Unterschiedliche Reibverhältnisse
- Lokale Oberflächenrauheit
- Temperatur

Um bei der Bestimmung der Unwucht eines solchen Bauteils valide, reproduzierbare und exakte Ergebnisse zu erhalten, müssen bislang relativ aufwendige Maßnahmen ergriffen werden. So ist jedes Messergebnis hinsichtlich seiner Validität mit einer bestimmten Anzahl von Vergleichsmessungen zu bestätigen und die Streuung der Ergebnisse zu beurteilen.

Im Stand der Technik sind mehrere Möglichkeiten zur Konditionierung des Rotationsbauteils beschrieben, so z.B.:
- Schleudern des Bauteils bei hohen Drehzahlen: Durch die Fliehkraftwirkung werden die Einzelmassen nach außen bewegt. Sofern der Führungsradius r der Einzelmassen klein genug ist, funktioniert diese Methode sehr gut. Bei größeren Führungsradien r kommt diese Methode jedoch an ihre Grenze, da die Fliehkräfte als Normalkräfte wirken und zu hohen Reibkräften in der Kontaktzone zwischen der Einzelmasse und den Führungsbolzen führen.
- Schütteln des Bauteils vor dem Messprozess: Ein reines Schütteln kann die Einzelmassen aus einer eventuell verklemmten Position befreien. Es ist jedoch weiterhin mit großen Streuungen in den Messwerten zu rechnen, da die Einzelmassen nicht zwingend in ihre Mittellage gebracht werden können.
- Orientieren der Einzelmassen durch gesonderte Maßnahmen: Die Einzelmassen können auf ihre Mittellage gebracht werden durch radial verfahrbare konusförmige Elemente, welche zwischen jeweils zwei Einzelmassen gefahren werden.

Alle bekannten Verfahren zur Unwuchtbestimmung von Fliehkraftpendeln oder ähnlichen Torsionsschwingungstilgern haben sich als relativ aufwendig und/oder nicht völlig reproduzierbar erwiesen. Verschiedene Beispiele von Messvorrichtungen und Messverfahren sind in US2010/009833, GB982868, ES2197323, US6005749 oder US2004/022170 beschrieben.

Es bestand somit die Aufgabe, ein neue Messmethode zur Bestimmung von Unwuchten an Rotationsbauteilen mit veränderlichen, bzw. vagabundierenden Unwuchten, insbesondere Fliehkraftpendeln oder ähnlichen Vorrichtungen, zu entwickeln, welche hochreproduzierbare und exakte Ergebnisse von Unwuchtzuständen bei derartigen Bauteilen liefert, und überdies einfach und schnell durchgeführt werden kann.

Die Aufgabe wurde durch Bereitstellung eines neuen Messverfahrens und einer neuen Messvorrichtung, mit der das Verfahren durchgeführt wird, wie folgend und in den Ansprüchen näher dargelegt, gelöst.

### ZUSAMMENFASSUNG DER ERFINDUNG:

Gegenstand der Erfindung ist somit eine Messvorrichtung und ein Verfahren zur Erhöhung der Reproduzierbarkeit und Genauigkeit von Unwuchtmessungen durch Simulation möglicher spätere Betriebszustände an einem auszuwuchtenden um eine Rotationsachse rotierenden, rotationssymmetrischen Bauteil, welches mehrere, voneinander unabhängig bewegbare, schwingungsfähige Einzelmassen zumeist am Umfang aufweist, im Wesentlichen umfassend das besagte Rotationsbauteil sowie eine Antriebsvorrichtung mit einer vorzugsweisen im Antrieb integrierten Messspindel, welche das besagte Rotationsbauteil hält und in Rotation versetzt und mit einer Sensor- und Messeinheit zur Bestimmung der durch am Rotationsbauteil auftretende Unwuchten erzeugten Schwingungen ausgestattet ist, wobei die Antriebsvorrichtung mit Messpindel erfindungsgemäß einen Direktantrieb, vorzugsweise einen Torque-Antrieb oder einem anderen vergleichbaren Direktantrieb von hoher Dynamik mit großem Beschleunigungsvermögen und Drehmoment aufweist und zudem eine Einrichtung oder Vorrichtung inklusive Steuer- und Regeleinheiten umfasst, welche befähigt ist, vor oder während der Messung bei einer ausgewählten Drehzahl des Rotationsbauteils dieses temporär mit einer periodischen oder harmonischen Schwingung mit einer zeitlich veränderlichen, vorzugsweise einer anfangs konstanten und dann abnehmenden Amplitude, anzuregen, deren Frequenz im Wesentlichen der Eigenfrequenz der Einzelmassen entspricht, wobei die temporäre Anregung die durch die Unwucht bedingten Schwingungen des Rotationsbauteils überlagert und bewirkt, dass die ursprünglich zufällig angeordneten Einzelmassen des Rotationsbauteils sich in Bezug auf die Rotationsachse des Rotationsbauteils symmetrisch zueinander ausrichten.

Gegenstand der Erfindung ist im Speziellen ein Verfahren zur reproduzierbaren Bestimmung des Unwuchtzustandes eines rotierenden rotationssymmetrischen Bauteils, wie oben beschrieben, welches im Wesentlichen vier Schritte umfasst, wobei insbesondere der zweite Schritt erfindungswesentlich ist.

Diese Schritte sind im Einzelnen:
(i) Beschleunigen des auszuwuchtenden Rotationsbauteils mittels eines dynamischen zu hohen Drehmomenten befähigten Direktantriebs auf eine ausgewählte auf das betreffende Rotationsbauteil abgestimmte Messdrehzahl (Beschleunigungsphase). Die Beschleunigungsrampe muss bauteilspezifisch ermittelt und auf einen optimalen Wert eingestellt werden, um die Einzelmassen nicht in eine ungewünschte Endlage zu bringen.
(ii) Überlagern der bei der ausgewählten Messdrehzahl durch das Rotationsbauteil bedingten Schwingungen mit einer periodischen oder harmonischen Anregungsschwingung mit einer zeitlich veränderlichen Amplitude und eine Frequenz, welcher im Wesentlichen der Eigenfrequenz der Einzelmassen des Rotationsbauteils entspricht, wobei die Anregungsschwingung entweder vom Direktantrieb erregt wird oder von einem zweiten Antrieb bzw. von einem externen Unwuchterreger erzeugt wird und so lange durchgeführt wird, bis sich die ursprünglich zufällig angeordneten Einzelmassen des Rotationsbauteils auf eine gemeinsame in Bezug auf die Rotationsachse symmetrische Mittellage eingestellt haben (Anregungsphase),
(iii) Durchführen der eigentlichen Messung des Unwuchtzustandes nach erfolgtem Abklingen der periodischen oder harmonischen Anregungsschwingung (Messphase), und
(iv) Abbremsen des Rotationsbauteils nach Ermittlung der Parameter des Unwuchtzustandes desselben (Verzögerungsphase). Die Verzögerungsrampe muss bauteilspezifisch ermittelt und dann auf einen optimalen Wert eingestellt werden, um die Einzelmassen nicht in eine ungewünschte Endlage zu bringen, sofern die für den weiteren Prozess notwendig ist.

In einer bevorzugten Ausführungsform der Erfindung wird die Anregungsschwingung mit zunächst konstanter und dann abnehmender Amplitude versehen.

In einer weiteren bevorzugten Ausführungsform der Erfindung weist der Direktantrieb eine integrierte Messpindel auf.

Das hier vorgestellte Messverfahren, bzw. die für dieses Verfahren zugrunde liegende Messvorrichtung weisen eine Reihe von Vorteilen mit Alleinstellungsmerkmalen auf:
Die Kombination des speziellen Messaufbaus mit einer Messspindel und dem beschriebenen integrierten Torque-Motorprinzip ohne zusätzliche Getriebeübersetzung und der beschriebenen speziell manipulierten Charakteristik der Motorsteuerung zur Realisierung einer temporären Oberschwingung mittels des gleichen oder eines separaten Antriebs ist bislang nicht als verfügbare technische Lösung bekannt.

Aktuelle Systeme verfügen häufig über ein zusätzliches Getriebe oder einen Riementrieb, welche jedoch die Anforderungen an die erforderliche Dynamik und die erforderliche Lebensdauer nicht erfüllen. Systeme ohne Zusatzübersetzung haben wiederum nicht genügend Drehmomentreserve, um die geforderte Dynamik zu erreichen.

Die vorteilhaften Alleinstellungsmerkmale sind im Einzelnen:
- Höchste Dynamik durch Torquemotor Charakteristik
- Die beschriebene Lösung orientiert direkt auf der Unwuchtmessspindel die chaotisch liegenden Fliehkraftpendel in eine symmetrische Ordnung und simuliert damit den "wahren Unwuchtzustand" der dem späteren Betriebsmodus am nächsten kommt.
- Die beschriebene Lösung erlaubt eine deutliche Verbesserung der Reproduzierbarkeit der Unwuchtmessung von Fliehkraftpendeln gegenüber herkömmlicher Methoden.
- Es besteht die Möglichkeit der einfachen Parametrierung des Aufbaus über die Software der Motorsteuerung, so dass verschiedene Betriebsmodi für unterschiedliche Bauteil-Typen einfach realisiert werden können. Beispielsweise können so Fliehkraftpendel für Verbrennungsmotoren mit 3, 4 oder 6 Zylinder mit einem Aufbau konditioniert werden.
- Dadurch kann der Aufbau und das Verfahren für unterschiedliche Bauteilgrößen und Tilgereigenfrequenzen verwendet werden. Es sind keine mechanischen Anpassungen am Aufbau erforderlich.

Der beschriebene Aufbau und das Verfahren zur Konditionierung von Fliehkraftpendeln lassen sich neben der beschriebenen Beispielanwendung im Antriebsstrang eines Verbrennungsmotors prinzipiell auch in anderen Bereichen der Technik einsetzen.

Dabei ist insbesondere an Anwendungen gedacht, bei denen Drehschwingungen mittels Fliehkraftpendeln gedämpft werden müssen, und ein Auswuchten der Fliehkraftpendel im Rahmen des Fertigungsprozesses erforderlich ist. Beispielhaft können hier Anwendungen in Antriebssträngen von Energiekraft- und Energiearbeitsmaschinen genannt werden, z.B. Windenergieanlagen, Hubkolbenkompressoren, Kraftwerksturbinen und Generatoren.

### DETAILLIERTE BESCHREIBUNG DER ERFINDUNG

### (i) Beschreibung der erfindungsgemäßen Messvorrichtung

Der in dieser Erfindung beschriebene Messaufbau und das Messverfahren stellen eine neue Methode dar, um eine reproduzierbare Unwuchtmessung der oben beschriebenen Fliehkraftpendel (FIG. 1) durchführen zu können. Die Lage und die Bewegung der Einzelmassen werden durch das Verfahren gezielt auf einen definierten Zustand gebracht. Sie nehmen dabei jeweils eine symmetrische Position entsprechend ihrer geometrischen Mittellage an. Die Summation der einzelnen Unwuchtvektoren ermöglicht somit, bei vorheriger Definition eines erlaubten Streukreisradius, eine stabile Messung des wahren Unwuchtbetrag und Unwuchtwinkel.

FIG. 1 stellt, wie gesagt, ein Beispiel eines Fliehkraftpendels dar, wie es erfindungsgemäß zum Einsatz kommen kann. Dabei bedeuten:

| | | | | | |
|---|---|---|---|---|---|
| (1) | Tilgemasse 1; | (2) | Tilgermasse 2; | (3) | Tilgermasse 3; |
| (4) | Mittellinie 1; | (5) | Mittellinie 2; | (6) | Mittellinie 3; |
| (7) | Seitenansicht des Fliehkraftpendels; | | | (8) | mehrlagige Tilgermassen; |
| (9) | Draufsicht des Fliehkraftpendels. | | | | |

Der Messaufbau setzt auf eine besonders auf Dynamik und Präzession ausgelegte Messspindel mit Direktantrieb. Mit Direktantrieb ist gemeint, dass auf der Abtriebswelle des Antriebs direkt das zu messende Bauteil gespannt ist und keine dazwischenliegende Getriebe- oder Riemenübersetzung zum Einsatz kommt. Der Antrieb selber besitzt einen kompakten Aufbau mit optimiertem Massenträgheitsmoment. Gleichzeitig wird ein hohes Beschleunigungsvermögen des Antriebs benötigt, um das in dieser Erfindung beschriebene Verfahren anwenden zu können. Eine weitere Anforderung an den Aufbau des Direktantriebs ist die integrierte Bauweise mit einer hochpräzisen Messspindel. Gerade für die Messtechnik einer Wuchtmaschine werden hier höchste Genauigkeiten in Bezug auf Rundlauf, Planlauf und Reproduzierbarkeit bei verschiedenen Axial- und Radiallasten gestellt.

Als Beispiel für den Direktantrieb sei insbesondere der Torquemotor erwähnt, welcher aufgrund des großen Wicklungsdurchmessers höchste Drehmomente (> 1.500 Nm) und damit höchste Dynamik erreicht. Das Fehlen, bzw. der Verzicht auf ein Getriebe oder eine Riemenübersetzung ist ein weiterer entscheidender Faktor für die direkte und schlupffreie Übertragung von Drehmomenten und ist auch Voraussetzung für das nachfolgend vorgestellte Messverfahren. Der große Wicklungsdurchmesser bringt den weiteren Vorteil, dass sich die Messspindellagerung in den Antrieb integrieren lässt.

Ein weiterer Vorteil des Torquemotors ist, dass er sich aufgrund geringer Störparameter und eine hoher Wiederholgenauigkeit sehr gut regeln lässt und praktisch verschleißfrei ist.

FIG. 2 zeigt den erfindungsgemäßen Messaufbau mit einem Torquemotor als Direktantrieb, einem auf eine Messspindel platzierten Fliehkraftpendel sowie einer Motorsteuerungseinrichtung, welche temporär harmonische Schwingungen generiert, die die Einzelmassen des Fliehkraftpendels mit deren Eigenfrequenzen anzuregen vermag. Hierbei bedeuten:

| | | | | | |
|---|---|---|---|---|---|
| (1) | Fliehkraftpendel; | (2) | radial wirkendes Spannfutter mit in das Bauteil eingreifendem Mitnahmestift zur Drehmomentaufnahme; | | |
| | | (3) | Direktantrieb | | |
| (4) | Federn; | (5) | Schwingungssensor (wegmessendes System); | | |
| (6) | Schwinger- Grundplatte; | (7) | Gestell; | (8) | Drehzahlgeber (z.B. Inkremental-oder Impulsgeber; |
| | | (9) | Piezosensor (kraftmessendes System); | | |
| (10) | Unwuchtsignal (Kraft messend); | | (11) Drehzahl; | (12) | Motorstrom; |
| (13) | Unwuchtsignal (Weg messend); | | (14) Hard- und Software für Motorsteuerung, Unwuchtmessungen und Visualisierung. | | |

Im Detail besteht der Messaufbau im Wesentlichen aus einem Gestell, welches fest mit dem Boden verankert ist. Die Messspindel mit Direktantrieb (z.B. eine Torquespindel) und Spannaufnahme sind auf einer Grundplatte befestigt und mittels Federelemente aufgehängt. Von der Spannaufnahme wird das Bauteil aufgenommen. Die Abstimmung der Federn richtet sich nach dem Konstruktionsprinzip des Unwuchtmessverfahrens, wobei zwischen weicher und harter Abstimmung unterschieden wird.

Bei der weichen Abstimmung findet ein Schwingungssensor auf der Schwinger-Grundplatte Verwendung. Bei der harten, kraftmessenden Abstimmung wird ein Piezosensor zwischen Gestell und Grundplatte eingesetzt. Der Aufbau kann weiterhin für 1- oder 2-Ebenen Messverfahren ausgelegt werden.

Das 1-Ebenen Verfahren wird maßgebend für flache, zylindrische Bauteile eingesetzt, d.h. wenn in der Regel der Bauteildurchmesser größer als die Bauteillänge ausfällt. In diesem Fall genügt die Ermittlung der Unwucht mit einem Unwuchtvektor. Es wird somit nur ein Schwingungssensor bzw. Piezoaufnehmer benötigt.

Das 2-Ebenen Verfahren wird bei Bauteilen eingesetzt, wenn in der Regel die Bauteillänge größer als der Bauteildurchmesser ausfällt. In diesem Fall wird die Unwucht mit 2 Unwuchtvektoren mit einem bestimmten Ebenen-Abstand beschrieben. Es werden in diesem Fall 2 Schwingungs- bzw. Piezoaufnehmer in entsprechendem Lagerabstand eingesetzt.

### (ii) Beschreibung des Messverfahrens des erfindungsgemäßen Verfahrens

Das Ziel der erfindungsgemäßen Bauteilkonditionierung besteht darin die Einzelmassen des Rotationsbauteils auf ihre Mittellage zu ordnen. Die allmähliche Reduktion der überlagerten Anregungsamplitude führt dabei zu einer Reduktion der Schwingungsamplitude der Einzelmassen. Dieser Effekt wird schließlich ausgenutzt um die erhöhte Reproduzierbarkeit der Unwuchtmessung zu realisieren.

Während das konventionelle Unwucht-Messverfahren sich aus einer Beschleunigungsphase, einer Messphase und einer Abbremsphase zusammensetzt, wird das neue Verfahren ergänzt um eine weitere Anregungsphase. Dazu wird die standardmäßige Motorsteuerungssoftware gezielt verstimmt und der eigentlichen Messdrehzahl eine harmonische Schwingung mit abklingender Amplitude überlagert.

Die Idee von der überlagerten harmonischen Schwingung zielt darauf ab, die Einzelmassen mit der Frequenz anzuregen, welche gerade ihrer Eigenfrequenz entspricht. Man kann diese Anregung auch vergleichen mit der Simulation der vom Verbrennungskraftmotor verursachten Anregung, welche bewusst auf das Fliehkraftpendel aufgeprägt wird, um die Einzelmassen in Bewegung zu versetzen. Diese Anregung wird über einen bestimmten Zeitraum auf die Messdrehzahl aufgeprägt und anschließend gegen Null gefahren. Nach Beendigung der Anregungsphase wird die konstante Messdrehzahl beibehalten. Die Einzelmassen befinden sich nun in ihrer jeweiligen Mittellage und der Unwucht-Messvorgang kann durchgeführt werden.

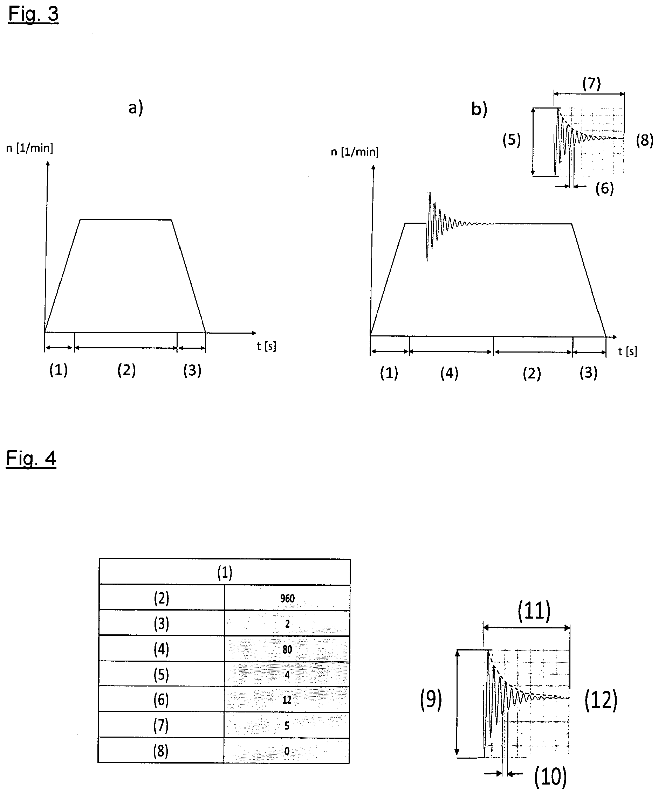

Der Drehzahl-Zeit-Verlauf für eine Fliehkraftpendel ist in FIG. 3 für die konventionelle Unwuchtmessmethode (3a) und für das neue entwickelte Messverfahren (3b) mittels einer zur Drehzahl überlagerter harmonischen Schwingung mit abklingender Amplitude (Anregungsphase) und anschließende Messphase dargestellt. In FIG. 3 bedeuten:

| | | | | | |
|---|---|---|---|---|---|
| (1) | Beschleunigungsphase; | (2) | Messphase zur Unwuchtbestimmung | | |
| (3) | Verzögerungsphase; | (4) | Anregungsphase; | (5) | Amplitude; |
| (6) | Frequenz; | (7) | Dauer; | (8) | Abklingkonstante |

Die Anregung kann im vorliegenden Fall aufgrund des enormen Dynamikvorteils direkt über den weiter oben beschriebenen Direktantrieb (z.B. einem Torquemotor) auf das Bauteil übertragen werden. Es ist auch denkbar, den oben beschriebenen Messaufbau mit einer separaten Unwucht-Quelle auszustatten. Dies kann zum Beispiel ein zusätzlicher Motor mit einem Scheibenläufer und einer exzentrisch angebrachten Unwuchtmasse sein. Dieser Unwucht-Erreger kann dann während der Anregungsphase parallel zum rotierenden Bauteil auf eine gewünschte Drehzahl beschleunigt werden und die Einzelmassen anregen.

Im Folgenden soll ein Beispiel für eine Anregung eines Fliehkraftpendels mit Abstimmung für die 2. Motorordnung eines Verbrennungskraftmotors beschrieben werden (FIG. 4): Dabei bedeuten die verwendeten Bezugsgrößen:

| | | | | | |
|---|---|---|---|---|---|
| (1) | Beispiel-Parameter für Fliehkraftpendel-Verstimmung für einen Verbrennungsmotor mit Abstimmung auf 2. Motorordnung; | | | | |
| (2) | Motordrehzahl (Leerlauf); | | | (3) | Perioden pro Umdrehung; |
| (4) | Maximale Amplitude der Anregung; | | | (5) | Minimale Amplitude der Anregung; |
| (6) | Dauer der Anregung; | | | (7) | Amplituden-Absenkung; |
| (8) | Schleifenzähler (Wiederholungen der Anregung); | | | (9) | Amplitude; |
| (10) | Frequenz; | (11) | Dauer; | (12) | Abklingkonstante. |

Die Messspindel wird dabei zunächst auf die Motorleerlaufdrehzahl, im vorliegenden Fall 960 1/min, beschleunigt. Anschließend wird die zusätzliche Überlagerungsfrequenz mit zwei Perioden pro Motorumdrehung der Grunddrehzahl überlagert. Man spricht in diesem Fall von einer Modulation der Motordrehzahl mit einer Oberschwingung der 2. Ordnung, d.h. dem 2-fachen der Grundfrequenz. Die Einzelmassen des Pendeltilgers sind auf diesen Drehzahlbereich abgestimmt und beginnen nun durch die gezielte Anregung im Resonanzbereich zu schwingen. Die Schwingungsamplitude der Anregung wird über die Amplitude (4) mit 80 1/min in Fig. 4 beschrieben. Die Zeitdauer der Einwirkung wird über eine Zeitdauer (6) mit 12 s definiert. Die Kurve kann dabei einer Abklingkurve folgen oder zum Ende der Dauer abrupt beendet werden. Das Abklingverhalten der Schwingung wird über die Abklingkonstante, Parameter (7) in Fig. 4 beschrieben. Schließlich besteht die Möglichkeit eine minimale Amplitude, Parameter (5) in Fig. 4 nach Beendigung der Einwirkungsphase beizubehalten. Der Vorgang der Schwingungsanregung lässt sich mehrmals hintereinander durchführen und kann durch den Schleifenzähler (8) in Fig. 4 festgelegt werden. Rechts in Fig. 4 sind in grafischer Form die Amplitude der Anregung (9), die Periodendauer der überlagerten Schwingung (10), die Zeitdauer der Anregung (11) und die Abklingkurve (12) dargestellt.

### (iii) Überprüfung der Wirksamkeit des erfindungsgemäßen Verfahrens

Nach der Anregungsphase, welche zum gezielten Ausrichten der Tilger-Einzelmassen in deren symmetrische Lage zueinander im Bezug zur Drehachse dient, können mehrere Verfahren angewendet werden, um die Wirksamkeit der Methode zu überprüfen.

Im allgemeinen können dies sein:
- Bildverarbeitung (z.B. High Speed Kamera)
- Schwingungs- bzw. Schallmessung (z.B. Mikrofon, Körperschallsensor)
- Abstandsmessung (z.B. Laser-basiert)

Die Idee besteht darin, die Lage der Einzelmassen untereinander zu prüfen.

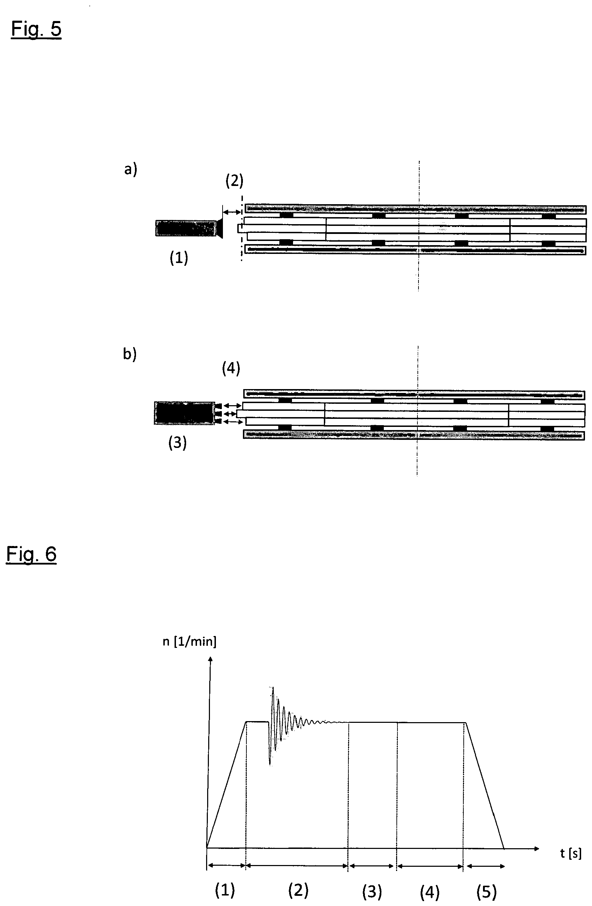

FIG. 5(a)(b) verdeutlicht das Prinzip anhand einer Abstandsmessung der beteiligten Tilgermassen des Fliehkraftpendels. Dabei bedeuten:
(1) Sensor für Lage-Erkennung der Tilgermassen mit Mittelwertbildung;
(2) erfasste gemittelte Lage der Tilgermassen (Länge des Maßpfeils in Fig. 5(a));
(3) Sensor für Lage-Erkennung der Tilger-Einzelmasse;
(4) erfasste, diskrete Lagen jeder Tilger-Einzelmasse (Länge des Maßpfeils in Fig. 5(b)).

FIG. 5(a) stellt dar, wie die Abstände der Einzelmassen gegenüber dem Sensor als gemittelter Wert in radialer Richtung ermittelt werden. In FIG. 5(b) wird für jede Einzelmasse ein eigener Abstand in radialer Richtung ermittelt. Hierfür werden ein Sensor mit Mehrfacherfassung oder mehrere parallel angeordnete Sensoren eingesetzt. Die Auswertung muss mindestens für eine vollständige Umdrehung erfolgen. Es können auch mehrere Umdrehungen herangezogen und Mittelungen unter den gemessenen Werten durchgeführt werden.

Mit Hilfe der Methode können sowohl Abstandsunterschiede zwischen den Tilger-Einzelmassen in radialer Richtung, als auch in Umfangsrichtung ausgewertet werden. Das zu bewertende Kriterium für eine erfolgreiche symmetrische Ausrichtung der Einzelmassen, ist das Erreichen von symmetrischen Abstandsprofilen für alle einzelnen Tilgermassen des Rotors über eine vollständige Umdrehung des Rotors von 360°. Entsprechende Toleranzbereiche zwischen den erfassten Abständen müssen festgelegt werden, um das Verfahren in der Praxis anwenden zu können. Bei Überschreiten des festgelegten Toleranzbereichs ist eine erneute Anregungsphase oder eine entsprechende Klassifizierung des Rotors durchzuführen.

Der Vorteil dieser Wirksamkeitsprüfung besteht darin, nach erfolgter Anregungsphase, eine Validierung der Ausrichtung der Einzelmassen im Bezug zur Drehachse durchführen zu können.

Entsprechend des beschriebenen Ablaufs, ergibt sich bei Anwendung des erfindungsgemäßen Verfahrens eine Erweiterung des Verfahrensablaufs wie in FIG. 6 dargestellt. Hierbei bedeuten:

| | | | | | |
|---|---|---|---|---|---|
| (1) | Beschleunigungsphase; | (2) | Anregungsphase; | (3) | (Wirksamkeits-) Prüfung der Tilgermassen-Ausrichtung; |
| | | (4) | Entscheidung: Messphase zur Unwuchtbestimmung oder Wiederholung der Anregung ab (2); | | |
| | | (5) | Verzögerungsphase. | | |

In den folgenden Patentansprüchen beziehen sich die dort genannten Bezugszeichen auf die Bezugszeichen der Figur 2.

## Patentansprüche

1. Messvorrichtung zur Erhöhung der Reproduzierbarkeit und Genauigkeit von Unwuchtmessungen durch Simulation möglicher späterer Betriebszustände an einem auszuwuchtenden um eine Rotationsachse rotierenden, rotationssymmetrischen Bauteil, welches mehrere, voneinander unabhängig bewegbare, schwingungsfähige Einzelmassen aufweist, umfassend das besagte Rotationsbauteil (1) sowie eine Antriebsvorrichtung (2)(3)(8), welche das besagte Rotationsbauteil hält und in Rotation versetzt und mit einer Messspindel, einem dynamischen Direktantrieb (3) und einer Sensor- und Messeinheit (5)(9) zur Bestimmung der durch am Rotationsbauteil auftretende Unwuchten erzeugten Schwingungen ausgestattet ist,
**dadurch gekennzeichnet, dass** die Antriebsvorrichtung eine Einrichtung oder Vorrichtung inklusive Steuer- und Regeleinheiten (8)(10)(11)(12)(13)(14) umfasst, welche befähigt ist, vor oder während der Messung bei einer ausgewählten Drehzahl des Rotationsbauteils dieses temporär mit einer periodischen oder harmonischen Schwingung mit einer zeitlich veränderlichen Amplitude anzuregen, deren Frequenz der Eigenfrequenz der Einzelmassen entspricht, wobei die temporäre Anregung die durch die Unwucht bedingten Schwingungen des Rotationsbauteils (1) überlagert und bewirkt, dass die ursprünglich zufällig angeordneten Einzelmassen des Rotationsbauteils (1) sich in Bezug auf die Rotationsachse des Rotationsbauteils symmetrisch zueinander ausrichten.

2. Messvorrichtung nach Anspruch 1, **dadurch gekennzeichnet, dass** der Direktantrieb (3) der Antriebsvorrichtung (2)(3)(8) ein Torquemotor ist.

3. Messvorrichtung nach Anspruch 1 oder 2, **dadurch gekennzeichnet, dass** die Messspindel integraler Bestandteil der Antriebsvorrichtung (2)(3)(8) ist.

4. Messvorrichtung nach einem der Ansprüche 1 - 3, **dadurch gekennzeichnet, dass** das auszuwuchtende rotationssymmetrische Bauteil ein Torsionsschwingungstilger ist.

5. Messvorrichtung nach Anspruch 4, **dadurch gekennzeichnet, dass** der Torsionsschwingungstilger ein Fliehkraftpendel ist.

6. Messvorrichtung nach Anspruch 5, **dadurch gekennzeichnet, dass** das Fliehkraftpendel mindestens zwei im Umfang gleichmäßig verteilte Einzelmassen aufweist.

7. Messvorrichtung nach einem der Ansprüche 1 - 6, **dadurch gekennzeichnet, dass** die Anregung der periodischen oder harmonischen Schwingung direkt durch die Antriebsvorrichtung erfolgt, oder über einen externen Unwuchterreger erfolgt.

8. Verwendung einer Messvorrichtung gemäß einem der Ansprüche 1 - 7 zur präzisen und reproduzierbaren Bestimmung von Unwuchten in Fliehkraftpendeln von Zweimassenschwungrädern oder Kupplungen als Bestandteil von Antriebssträngen von Verbrennungsmotoren oder andere Energiekraft- oder Energiearbeitsmaschinen.

9. Verfahren zur reproduzierbaren Bestimmung des Unwuchtzustandes eines rotierenden rotationssymmetrischen Bauteils, welches mehrere, voneinander unabhängig bewegbare und gelagerte schwingungsfähige Einzelmassen umfasst, wobei der Bewegungszustand des Rotationsbauteils einem ausgewählten späteren Betriebsmodus entspricht oder ihm am nächsten kommt, **dadurch gekennzeichnet, dass** es folgende Schritte umfasst:
(i) Beschleunigen des auszuwuchtenden Rotationsbauteils (1) mittels eines dynamischen Direktantriebs (3) einer Antriebsvorrichtung (2)(3)(8) auf eine ausgewählte auf das betreffende Rotationsbauteil abgestimmte Messdrehzahl (Beschleunigungsphase)
(ii) Überlagern der bei der ausgewählten Messdrehzahl durch das Rotationsbauteil (1) bedingten Schwingungen mit einer periodischen oder harmonischen Anregungsschwingung mit einer zeitlich veränderlichen Amplitude und eine Frequenz, welcher der Eigenfrequenz der Einzelmassen des Rotationsbauteils entspricht, wobei die Anregungsschwingung so lange durchgeführt wird, bis sich die ursprünglich zufällig angeordneten Einzelmassen des Rotationsbauteils (1) auf eine gemeinsame in Bezug auf die Rotationsachse symmetrische Mittellage eingestellt haben (Anregungsphase);
(iii) Durchführen der eigentlichen Messung des Unwuchtzustandes nach erfolgtem Abklingen der harmonischen Anregungsschwingung (Messphase), und
(iv) Abbremsen des Rotationsbauteils nach Ermittlung der Parameter des Unwuchtzustandes desselben (Verzögerungsphase).

10. Verfahren nach Anspruch 9, **dadurch gekennzeichnet, dass** die periodische oder harmonische Anregungsschwingung mit einer zunächst konstanten Amplitude, gefolgt von einer zeitlich abnehmenden Amplitude, durchgeführt wird.

11. Verfahren nach Anspruch 9 oder 10, **dadurch gekennzeichnet, dass** die Erzeugung der periodischen oder harmonischen Anregungsschwingung mit Hilfe des Direktantriebs (3) der Antriebsvorrichtung (2)(3)(8) selbst durchgeführt wird.

12. Verfahren nach Anspruch 9 oder 10, **dadurch gekennzeichnet, dass** die Erzeugung der periodischen oder harmonischen Anregungsschwingung mit Hilfe einer separaten, Unwucht erzeugenden Antriebsvorrichtung oder mittels eines externen Unwuchterregers durchgeführt wird.

13. Verfahren nach einem der Ansprüche 9 - 12, **dadurch gekennzeichnet, dass** ein Torquemotor als Direktantrieb der Antriebsvorrichtung (2)(3)(8) eingesetzt wird.

14. Verfahren nach einem der Ansprüche 9 - 13, **dadurch gekennzeichnet, dass** als Rotationsbauteil (1) ein Fliehkraftpendel mit mindesten zwei Einzelmassen eingesetzt wird.

15. Verfahren nach einem der Ansprüche 9 - 14, **dadurch gekennzeichnet, dass** der Direktantrieb (3) der Antriebsvorrichtung (2)(3)(8) eine integrierte Messpindel aufweist.

16. Verfahren nach einem der Ansprüche 9 - 15, **dadurch gekennzeichnet, dass** eine Wirksamkeitsprüfung der Unwuchtmessung durchgeführt wird.

17. Verfahren nach Anspruch 9 oder 16, **dadurch gekennzeichnet, dass** eine Messvorrichtung gemäß einem der Ansprüche 1-7 eingesetzt wird.

## Claims

1. Measuring device for increasing the reproducibility and accuracy of imbalance measurements by simulating possible future operating states on a rotationally symmetrical component to be balanced which rotates about an axis of rotation and has a plurality of individual vibratory masses which can be moved independently of one another, comprising said rotary component (1) and a drive device (2)(3)(8) which holds and rotates said rotary component and is provided with a measuring spindle, a dynamic direct drive (3), and a sensor measuring unit (5)(9) for determining the vibrations produced by imbalances on the rotary component,
**characterized in that** the drive device comprises an apparatus or device which includes open- and closed-loop control units (8)(10)(11)(12)(13)(14) and is capable, before or during the measurement at a selected rotational speed of the rotary component, of temporarily exciting said rotary component with a periodic or harmonic vibration having a time-varying amplitude, the frequency of which vibration corresponds to the natural frequency of the individual masses, the temporary excitation superimposing the vibrations of the rotary component (1) resulting from the imbalance and causing the originally randomly arranged individual masses of the rotary component (1) to align symmetrically to one another with respect to the axis of rotation of the rotary component.

2. Measuring device according to claim 1, **characterized in that** the direct drive (3) of the drive device (2)(3)(8) is a torque motor.

3. Measuring device according to either claim 1 or claim 2, **characterized in that** the measuring spindle is an integral part of the drive device (2)(3)(8).

4. Measuring device according to any of claims 1 to 3, **characterized in that** the rotationally symmetrical component to be balanced is a torsional vibration damper.

5. Measuring device according to claim 4, **characterized in that** the torsional vibration damper is a centrifugal pendulum absorber.

6. Measuring device according to claim 5, **characterized in that** the centrifugal pendulum absorber has at least two individual masses evenly distributed around the circumference.

7. Measuring device according to any of claims 1 to 6, **characterized in that** the periodic or harmonic vibration is excited directly by the drive device or via an external imbalance exciter.

8. Use of a measuring device according to any of claims 1 to 7 for the precise and reproducible determination of imbalances in centrifugal pendulum absorbers of dual mass flywheels or clutches as part of drive trains of internal combustion engines or other energy-generating or working machines.

9. Method for the reproducible determination of the imbalance state of a rotating, rotationally symmetrical component which comprises a plurality of independently movable and mounted individual vibratory masses, the movement state of the rotary component corresponding to or closely approximating a selected future operating mode, **characterized in that** it comprises the following steps:
(i) using a dynamic direct drive (3) of a drive device (2)(3)(8), accelerating the rotary component (1) to be balanced to a selected measuring speed that is matched to the rotary component in question (acceleration phase)
(ii) superimposing the vibrations caused by the rotary component (1) at the selected measuring speed onto a periodic or harmonic excitation vibration with a time-varying amplitude and a frequency which corresponds to the natural frequency of the individual masses of the rotary component, the excitation vibration being carried out until the originally randomly arranged individual masses of the rotary component (1) have settled in a common central position which is symmetrical with respect to the axis of rotation (excitation phase);
(iii) carrying out the actual measurement of the imbalance state after the harmonic excitation vibration has decayed (measurement phase), and
(iv) braking the rotary component after identifying the parameters of the imbalance state of said component (deceleration phase).

10. Method according to claim 9, **characterized in that** the periodic or harmonic excitation vibration is carried out with an initially constant amplitude, followed by an amplitude that decreases over time.

11. Method according to either claim 9 or claim 10, **characterized in that** the periodic or harmonic excitation vibration is generated by means of the direct drive (3) of the drive device (2)(3)(8) itself.

12. Method according to either claim 9 or claim 10, **characterized in that** the periodic or harmonic excitation vibration is generated by means of a separate, imbalance-generating drive device or by means of an external imbalance exciter.

13. Method according to any of claims 9 to 12, **characterized in that** a torque motor is used as a direct drive of the drive device (2)(3)(8).

14. Method according to any of claims 9 to 13, **characterized in that** a centrifugal pendulum absorber having at least two individual masses is used as the rotary component (1).

15. Method according to any of claims 9 to 14, **characterized in that** the direct drive (3) of the drive device (2)(3)(8) has an integrated measuring spindle.

16. Method according to any of claims 9 to 15, **characterized in that** a performance test of the imbalance measurement is carried out.

17. Method according to either claim 9 or claim 16, **characterized in that** a measuring device according to any of claims 1 to 7 is used.

## Revendications

1. Dispositif de mesure permettant d'augmenter la reproductibilité et la précision de mesures de balourd en simulant d'éventuels états de fonctionnement ultérieurs sur un élément à symétrie de révolution à équilibrer et tournant autour d'un axe de rotation, lequel présente plusieurs masses individuelles oscillantes pouvant être déplacées indépendamment les unes des autres, comprenant ledit élément de rotation (1) ainsi qu'un dispositif d'entraînement (2) (3) (8), lequel maintient ledit élément de rotation et le met en rotation et est équipé d'une broche de mesure, d'un entraînement direct (3) dynamique et d'une unité de capteur et de mesure (5) (9) permettant de déterminer les oscillations générées par les balourds produits par l'élément de rotation,
**caractérisé en ce que** le dispositif d'entraînement comprend un appareil ou un dispositif incluant des unités de commande et de régulation (8) (10) (11) (12) (13) (14), lequel est capable, avant ou pendant la mesure d'une vitesse de rotation sélectionnée de l'élément de rotation, d'exciter temporairement l'élément de rotation avec une oscillation périodique ou harmonique d'amplitude variable dans le temps, dont la fréquence correspond à la fréquence de résonance des masses individuelles, dans lequel l'excitation temporaire superpose et provoque les oscillations de l'élément de rotation (1) provoquées par le balourd afin que les masses individuelles de l'élément de rotation (1) disposées à l'origine de manière aléatoire s'alignent symétriquement les unes aux autres par rapport à l'axe de rotation de l'élément de rotation.

2. Dispositif de mesure selon la revendication 1, **caractérisé en ce que** l'entraînement direct (3) du dispositif d'entraînement (2) (3) (8) est un moteur-couple.

3. Dispositif de mesure selon la revendication 1 ou 2, **caractérisé en ce que** la broche de mesure fait partie intégrante du dispositif d'entraînement (2) (3) (8).

4. Dispositif de mesure selon l'une des revendications 1 à 3, **caractérisé en ce que** l'élément à symétrie de révolution à équilibrer est un amortisseur de vibrations de torsion.

5. Dispositif de mesure selon la revendication 4, **caractérisé en ce que** l'amortisseur de vibrations de torsion est un pendule à force centrifuge.

6. Dispositif de mesure selon la revendication 5, **caractérisé en ce que** le pendule à force centrifuge présente au moins deux masses individuelles régulièrement réparties sur la circonférence.

7. Dispositif de mesure selon l'une des revendications 1 à 6, **caractérisé en ce que** l'excitation de l'oscillation périodique ou harmonique s'effectue directement par le dispositif d'entraînement ou s'effectue par l'intermédiaire d'un excitateur à balourd externe.

8. Utilisation d'un dispositif de mesure selon l'une des revendications 1 à 7 permettant la détermination précise et reproductible des balourds dans des pendules à force centrifuge de volants d'inertie à deux masses ou d'embrayages faisant partie de chaînes de transmission de moteurs à combustion interne ou d'autres machines à force d'énergie ou à travail d'énergie.

9. Procédé permettant la détermination reproductible de l'état de balourd d'un élément à symétrie de révolution rotatif, lequel comprend plusieurs masses individuelles oscillantes, mobiles et supportées indépendamment les unes des autres, dans lequel l'état de mouvement de l'élément de rotation correspond à un mode de fonctionnement ultérieur sélectionné ou s'en rapproche le plus, **caractérisé en ce qu'**il comprend les étapes suivantes :
(i) accélération de l'élément de rotation (1) à équilibrer au moyen d'un entraînement direct (3) dynamique d'un dispositif d'entraînement (2) (3) (8) à une vitesse de rotation de mesure sélectionnée et adaptée audit élément de rotation (phase d'accélération)
(ii) superposition des oscillations provoquées par l'élément de rotation (1) à la vitesse de rotation de mesure sélectionnée et comportant une oscillation d'excitation périodique ou harmonique comportant une amplitude variable dans le temps et une fréquence, laquelle fréquence correspond à la fréquence de résonance des masses individuelles de l'élément de rotation, dans lequel l'oscillation d'excitation est réalisée jusqu'à ce que les masses individuelles de l'élément de rotation (1) disposées à l'origine de manière aléatoire soient placées dans une position médiane commune qui est symétrique par rapport à l'axe de rotation (phase d'excitation) ;
(iii) réalisation de la mesure de résonance de l'état de balourd après la décroissance de l'oscillation d'excitation harmonique ayant eu lieu (phase de mesure), et
(iv) freinage de l'élément de rotation après la détermination des paramètres de l'état de balourd de celui-ci (phase de décélération).

10. Procédé selon la revendication 9, **caractérisé en ce que** l'oscillation d'excitation périodique ou harmonique est réalisée avec une amplitude initialement constante, suivie d'une amplitude décroissante dans le temps.

11. Procédé selon la revendication 9 ou 10, **caractérisé en ce que** la génération de l'oscillation d'excitation périodique ou harmonique est réalisée à l'aide de l'entraînement direct (3) du dispositif d'entraînement (2) (3) (8) lui-même.

12. Procédé selon la revendication 9 ou 10, **caractérisé en ce que** la génération de l'oscillation d'excitation périodique ou harmonique est réalisée à l'aide d'un dispositif d'entraînement générateur de balourd séparé ou au moyen d'un excitateur à balourd externe.

13. Procédé selon l'une des revendications 9 à 12, **caractérisé en ce qu'**un moteur-couple est utilisé en tant qu'entraînement direct du dispositif d'entraînement (2) (3) (8).

14. Procédé selon l'une des revendications 9 à 13, **caractérisé en ce qu'**un pendule à force centrifuge comportant au moins deux masses individuelles est utilisé comme élément de rotation (1).

15. Procédé selon l'une des revendications 9 à 14, **caractérisé en ce que** l'entraînement direct (3) du dispositif d'entraînement (2) (3) (8) présente une broche de mesure intégrée.

16. Procédé selon l'une des revendications 9 à 15, **caractérisé en ce qu'**un test d'efficacité de la mesure de balourd est effectué.

17. Procédé selon la revendication 9 ou 16, **caractérisé en ce qu'**un dispositif de mesure selon l'une des revendications 1 à 7 est utilisé.
